# EUROPEAN PATENT SPECIFICATION

(11) **EP 2 939 463 B1**
(45) Date of publication and mention of the grant of the patent: **27.02.2019**
(21) Application number: 14745682.6
(22) Date of filing: 23.01.2014
(51) Int. Cl.: H04W 28/02, H04W 52/02, G06F 1/16, H04W 76/38, H04W 76/28, H04W 84/12, G06F 1/32

(54) **DYNAMIC ADAPTATION OF A TRAFFIC INACTIVITY TIMER**
DYNAMISCHE ANPASSUNG EINES VERKEHRSINAKTIVITÄTSTIMERS
ADAPTATION DYNAMIQUE D'UN TEMPORISATEUR D'INACTIVITÉ DE TRAFIC

(30) Priority: 31.01.2013 US 201361759128 P
(43) Date of publication of application: 04.11.2015
(73) Proprietor: Apple Inc., Cupertino CA 95014 (US)
(72) Inventor: CHHABRA, Kapil, Cupertino, California 95014 (US)
(74) Representative: Lang, Johannes
(86) International application number: PCT/US2014/012649
(87) International publication number: WO 2014/120537

(56) References cited:
- EP-A1- 1 619 906
- EP-B1- 1 482 691
- WO-A1-2010/094320
- US-A1- 2002 172 178
- US-A1- 2003 189 951
- US-A1- 2005 287 949
- US-A1- 2008 181 127
- US-A1- 2009 287 948
- US-A1- 2012 264 416
- ERICSSON ET AL: "Open issues on HS-DSCH DRX operation with second DRX cycle", 3GPP DRAFT; R2-121872 OPEN ISSUES ON HS-DSCH DRX OPERATION WITH SECOND DRX CYCLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, South Korea; 20120326 - 20120330, 29 March 2012 (2012-03-29), XP050606541, [retrieved on 2012-03-29]

## Description

### FIELD

The described embodiments relate generally to wireless communications technology. More particularly, the present embodiments relate to dynamic adaptation of a traffic inactivity timer that can be applied to a wireless network interface.

### BACKGROUND

Mobile device manufacturers continue to strive to develop improved wireless communication devices offering users with an improved user experience. However, improvements in user experience often involve tradeoffs. For example, it is desirable to offer users devices providing high throughput and low latency. However, improvements in throughput and latency often come at the expense of increased power consumption, which can reduce battery life. One methodology that has been used by device manufacturers to attempt to address the challenge of offering improved throughput and lower latency without drastically increasing power consumption is to implement a traffic inactivity timer for a wireless local area network (WLAN) interface, which powers off the WLAN interface when no transmit/receive activity is detected after a defined inactivity timeout period used for the traffic inactivity timer.

Current devices generally apply a traffic inactivity timer having a static, one size fits all, inactivity timeout period regardless of network or device conditions. Thus, in current implementations, the same static inactivity timeout period is applied for all traffic types, including for both periodic low bandwidth traffic, such as a voice call, and bursty high bandwidth traffic, such as a web page download. The static inactivity timeout period often exceeds the periodicity of periodic low bandwidth traffic. For example, while periodic transmission/reception (Tx/Rx) of keep alive frames or a voice frame can occur on the order of every 20 milliseconds, application of a static 50 millisecond inactivity timeout period in accordance with some current implementations incurs the penalty of the device keeping the WLAN interface awake for at least one static inactivity timeout period. In this regard, when the static inactivity timeout period exceeds the periodicity of low bandwidth traffic, such as the voice frame periodicity of a voice call, the WLAN interface can stay awake indefinitely, thus unnecessarily consuming power without offering any commensurate improvement in user experience through improved throughput or lower latency.

EP 1 619 906 A1 discloses a method of controlling wireless network resources for data sessions involves the steps of identifying IP address usage for mobile stations operating in a wireless communication network and causing a data inactivity timer of a data session for a mobile station to be set to an initial value that depends on the IP address usage. The data inactivity timer is set to a relatively large value when the IP address usage is low, but to a relatively small value when the IP address usage is high in order to expeditiously release underutilized network resources.

ERICSSON ET AL, "Open issues on HS-DSCH DRX operation with second DRX cycle", 3GPP DRAFT; R2-121872 OPEN ISSUES ON HS-DSCH DRX OPERATION WITH SECOND DRX CYCLE, 3RD GENERATION PARTNERSHIP PROJECT (3GPP), RAN WG2, Jeju, South Korea discloses the use of two different inactivity timers as part of changing between an active state of continuous RX, a 1st DRX cycle state, and a 2nd DRX cycle state. The UE of always returns to the continuous RX active state when any UL data or DL data occurs, and thus after any period of data activity the "short" inactivity timer is used, and only while in the 1st DRX cycle state is the "long" inactivity timer used.

US 2008 / 0181127 A1 discloses a method for controlling discontinuous reception in a wireless transmit/receive unit includes defining a plurality of DRX levels, wherein each DRX level includes a respective DRX cycle length and transitioning between DRX levels based on a set of criteria. The transitioning may be triggered by implicit rules.

### SUMMARY

Some example embodiments provide a wireless communication device configured to dynamically adapting a traffic inactivity timer based on observed device usage conditions. In some example embodiments, implicit criteria, such as activity on a wireless network interface can be used to dynamically adapt the traffic inactivity timer. Thus, for example, in some embodiments, if a monitored activity on the wireless network interface exceeds a threshold activity level, a longer inactivity timeout period (e.g., a longer traffic inactivity timer duration) can be applied than if monitored activity does not exceed the threshold activity level. As such, a longer inactivity timeout period can be applied for bursty traffic so as to reduce latency and improve user experience, while a shorter inactivity timeout period can be applied for periodic, low bandwidth traffic, allowing the interface to be put into a sleep state to conserve power between periods of data Tx/Rx without impacting user experience. Additionally or alternatively, in some example embodiments, explicit criteria related to a device usage context, such as active application context information, can be used to dynamically adapt the inactivity timeout period based on anticipated latency and throughput needs for the device usage context.

This summary is provided merely for purposes of summarizing some example embodiments so as to provide a basic understanding of some aspects of the disclosure. Accordingly, it will be appreciated that the above described example embodiments are merely examples and should not be construed to narrow the scope of the claims in any way. Other embodiments, aspects, and advantages will become apparent from the following detailed description taken in conjunction with the accompanying drawings which illustrate, by way of example, the principles of the described embodiments.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 illustrates an example wireless communication system in which some example embodiments can be applied;
FIG. 2 illustrates a further example wireless communication system in which some example embodiments can be applied;
FIG. 3 illustrates a block diagram of an apparatus that can be implemented on a wireless communication device in accordance with some example embodiments;
FIG. 4 illustrates a flowchart of an example method for dynamically adapting a traffic inactivity timer based at least in part on activity on a wireless network interface in accordance with some example embodiments;
FIG. 5 illustrates a flowchart of another example method for dynamically adapting a traffic inactivity timer based at least in part on activity on a wireless network interface in accordance with some example embodiments;
FIG. 6 illustrates a flowchart of an example method for dynamically adapting a traffic inactivity timer applied to a WLAN interface in accordance with some example embodiments;
FIG. 7 illustrates a flowchart of an example method for implementing a hysteresis condition when dynamically adapting a traffic inactivity timer in accordance with some example embodiments; and
FIG. 8 illustrates a flowchart of an example method for dynamically adapting a traffic inactivity timer based at least in part on a device usage context in accordance with some example embodiments.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the scope of the described embodiments as defined by the appended claims.

Present traffic inactivity timers generally implement a static inactivity timeout period, which do not account varying network conditions, such as latency variance that can occur between access networks using low latency fiber backbones and access networks using higher latency backbones, such as satellite and WiMAX (Worldwide Interoperability for Microwave Access) links. Moreover, present static inactivity timeout periods do not account for variance between different traffic profiles, such as variance between periodic low bandwidth traffic and bursty high bandwidth traffic. As a result, static inactivity timeout periods often result in a wireless network interface remaining in a power consuming awake state even in situations in which the interface could be placed in a power saving sleep state without noticeably impacting user experience.

Some example embodiments address the problems presented by use of static inactivity timeout periods (also referred to as "inactivity timeout values") by dynamically adapting a traffic inactivity timer based on observed device usage conditions. In some example embodiments, implicit criteria, such as activity on a wireless network interface, can be used to dynamically adapt the traffic inactivity timer. Thus, for example, in some embodiments, if a data traffic level and/or other monitored activity on the wireless network interface exceeds a threshold activity level, a longer inactivity timeout period (e.g., a longer traffic inactivity timer duration) can be applied than if monitored activity does not exceed the threshold activity level. In this regard, a longer inactivity timeout period can be applied for bursty traffic so as to improve the user experience by reducing latency and offering improved throughput. Further, an inactivity timeout period that can have a shorter period than that which can be used for bursty traffic can be applied for periodic, low bandwidth traffic, thereby allowing the interface to be put into a sleep state without impacting user experience. Accordingly, the wireless communication device of such example embodiments can avoid using a static inactivity timeout period that can have a longer duration than the periodicity of voice call traffic and/or other low bandwidth traffic, thus allowing the wireless network interface to be placed in a power saving mode for larger amounts of time without impacting user experience. Additionally or alternatively, in some example embodiments, a traffic inactivity timer can be adapted based on explicit criteria related to a device usage context, such as application context information.

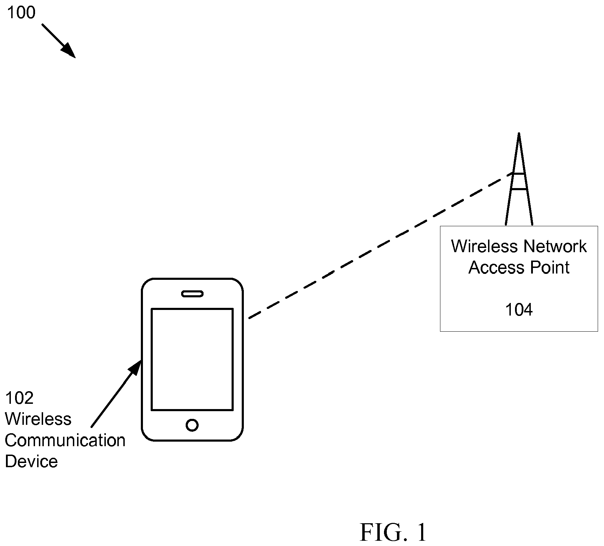

These and other embodiments are discussed below with reference to FIGS. 1-8. However, those skilled in the art will readily appreciate that the detailed description given herein with respect to these Figures is for explanatory purposes only and should not be construed as limiting.

FIG. 1 illustrates an example wireless communication system 100 in which some example embodiments can be applied. The wireless communication system 100 includes a wireless communication device 102. By way of non-limiting example, the wireless communication device 102 can be embodied as a cellular phone, such as a smart phone device, a tablet computing device, a laptop computing device, and/or other computing device that can be configured to communicate over one or more wireless networks. The wireless communication device 102 can include one or more wireless network interfaces, which can be used to connect to any of a variety of wireless networks. By way of non-limiting example, the wireless communication device 102 can include a WLAN interface(s), such as can use an Institute of Electrical and Electronics Engineers (IEEE) 802.11 technology (e.g., IEEE 802.11a/b/g/n/ac/ad/af and/or other present or future developed version of the IEEE 802.11 standard); a cellular interface(s); a wireless personal area network (WPAN) interface(s), such as a Bluetooth interface, Zigbee interface, wireless Universal Serial Bus (USB) interface, and/or other WPAN interface); some combination thereof; and/or one or more further type(s) of wireless network interfaces.

The wireless communication device 102 can be configured to access a wireless network via a wireless network access point 104. For example, in some embodiments, wireless network access point 104 can comprise a WLAN access point, such as a WLAN router, WLAN bridge, and/or other WLAN access point. As further examples, in some embodiments, the wireless network access point 104 can additionally or alternatively comprise a cellular base station, such as a base transceiver station, node B, evolved node B, femtocell, and/or other type of base station that can be used to access a cellular network; a WiMax gateway; and/or other type of wireless network access point. In this regard, wireless network access point 104 can be an access point in accordance with any type of wireless communications technology that can be supported by wireless communication device 102.

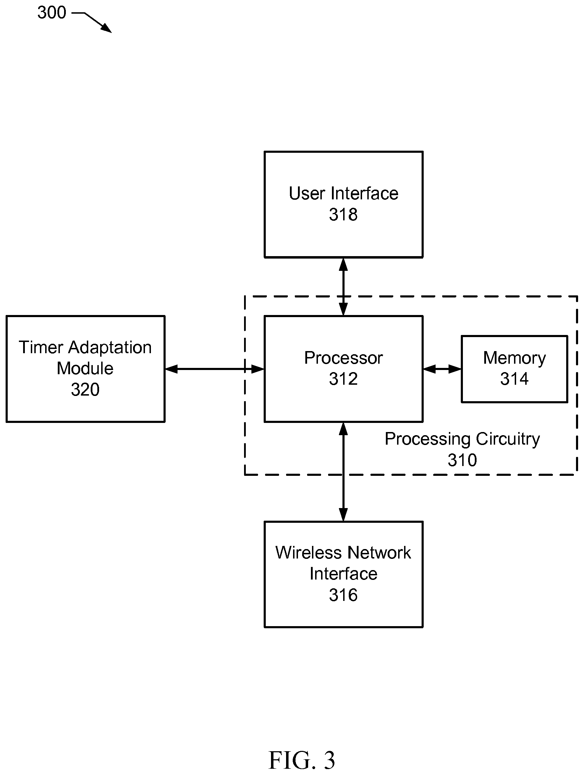

Data transmitted to and/or received from the wireless network access point 104 by the wireless communication device 102 can accordingly be transmitted and received via a wireless network interface, such as wireless network interface 316 illustrated in and described below with respect to FIG. 3, that can be implemented on the wireless communication device 102. A traffic inactivity timer, which can be dynamically adapted in accordance with one or more example embodiments described herein, can be applied to the wireless network interface. In this regard, if there is a period of traffic inactivity (e.g., a period without Tx data and/or without Rx data) on the wireless network interface that exceeds an inactivity timeout period used for the traffic inactivity timer, the wireless network interface can be placed in a power saving mode. In the power saving mode, one or more components associated with the wireless network interface, such as a radio that can be associated with the wireless network interface, can be deactivated to reduce power consumption by the wireless communication device 102.

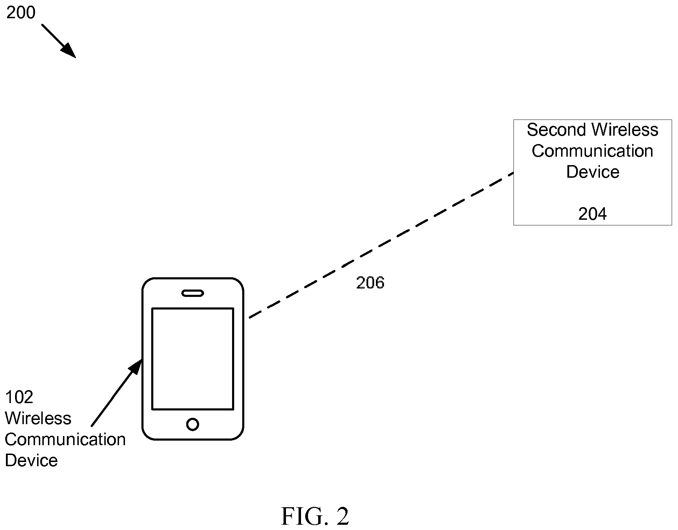

In addition to structured network implementations in which wireless communication device 102 can access a wireless network via an access point, such as wireless network access point 104, as illustrated in FIG. 1, it will be appreciated that some example embodiments can be applied to a wireless network interface that can be used to support unstructured, ad hoc communications between two or more wireless communication devices, such as wireless peer-to-peer (P2P) communications between wireless communication device 102 and a further wireless communication device. For example, FIG. 2 illustrates a wireless communication system 200 in which some example embodiments can be applied. In the system 200, the wireless communication device 102 can communicate with a second wireless communication device 204 via wireless link 206. Wireless link 206 can be provided by any wireless communication technology allowing ad hoc P2P communications, such as, by way of non-limiting example a WPAN technology (e.g., Bluetooth, Zigbee, wireless USB, and/or the like), Wi-Fi direct, Apple® AirPlay, and/or other wireless communication technology/protocol allowing for ad hoc P2P communication between devices without requiring structured communication through a network access point.

Data transmitted to and/or received from the second wireless communication device 204 via the wireless link 206 can be transmitted and received via a wireless network interface, such as wireless network interface 316 illustrated in and described below with respect to FIG. 3, that can be implemented on the wireless communication device 102. A traffic inactivity timer, which can be dynamically adapted in accordance with one or more example embodiments described herein, can be applied to the wireless network interface. In this regard, if there is a period of traffic inactivity without the wireless communication device 102 sending and/or receiving data over the wireless link 206 that exceeds an inactivity timeout period used for the traffic inactivity timer, the wireless network interface can be placed in a power saving mode.

FIG. 3 illustrates a block diagram of an apparatus 300 that can be implemented on a wireless communication device 102 in accordance with some example embodiments. In this regard, when implemented on a computing device, such as wireless communication device 102, apparatus 300 can enable the computing device to operate within the system 100 and/or system 200 in accordance with one or more example embodiments. It will be appreciated that the components, devices or elements illustrated in and described with respect to FIG. 3 below may not be mandatory and thus some may be omitted in certain embodiments. Additionally, some embodiments can include further or different components, devices or elements beyond those illustrated in and described with respect to FIG. 3.

In some example embodiments, the apparatus 300 can include processing circuitry 310 that is configurable to perform actions in accordance with one or more example embodiments disclosed herein. In this regard, the processing circuitry 310 can be configured to perform and/or control performance of one or more functionalities of the apparatus 300 in accordance with various example embodiments, and thus can provide means for performing functionalities of the wireless communication device 102 in accordance with various example embodiments. The processing circuitry 310 can be configured to perform data processing, application execution and/or other processing and management services according to one or more example embodiments.

In some embodiments, the apparatus 300 or a portion(s) or component(s) thereof, such as the processing circuitry 310, can include one or more chipsets, which can each include one or more chips. The processing circuitry 310 and/or one or more further components of the apparatus 300 can therefore, in some instances, be configured to implement an embodiment on a chipset comprising one or more chips. In some example embodiments in which one or more components of the apparatus 300 are embodied as a chipset, the chipset can be capable of enabling a computing device to operate in the system 100 and/or system 200 when implemented on or otherwise operably coupled to the computing device. Thus, for example, one or more components of the apparatus 300 can provide a chipset configured to enable a computing device communicate using one or more wireless network technologies. As more particular examples, one or more components of the apparatus 300 can provide a WLAN chipset, Bluetooth chipset, cellular chipset, and/or other chipset that can comprise a wireless network interface configured to enable a computing device to communicate via one or more wireless communication technologies.

In some example embodiments, the processing circuitry 310 can include a processor 312 and, in some embodiments, such as that illustrated in FIG. 3, can further include memory 314. The processing circuitry 310 can be in communication with or otherwise control a wireless network interface 316, user interface 318, and/or timer adaptation module 320.

The processor 312 can be embodied in a variety of forms. For example, the processor 312 can be embodied as various hardware-based processing means, such as a microprocessor, a coprocessor, a controller or various other computing or processing devices including integrated circuits such as, for example, an ASIC (application specific integrated circuit), an FPGA (field programmable gate array), some combination thereof, or the like. Although illustrated as a single processor, it will be appreciated that the processor 312 can comprise a plurality of processors. The plurality of processors can be in operative communication with each other and can be collectively configured to perform one or more functionalities of the wireless communication device 102 as described herein. In some example embodiments, the processor 312 can be configured to execute instructions that can be stored in the memory 314 or that can be otherwise accessible to the processor 312. As such, whether configured by hardware or by a combination of hardware and software, the processor 312 can be capable of performing operations according to various embodiments while configured accordingly.

In some example embodiments, the memory 314 can include one or more memory devices. Memory 314 can include fixed and/or removable memory devices. In some embodiments, the memory 314 can provide a non-transitory computer-readable storage medium that can store computer program instructions that can be executed by the processor 312. In this regard, the memory 314 can be configured to store information, data, applications, instructions and/or the like for enabling the apparatus 300 to carry out various functions in accordance with one or more example embodiments. In some embodiments, the memory 314 can be in communication with one or more of the processor 312, wireless network interface 316, user interface 318, or timer adaptation module 320 via a bus (or buses) for passing information among components of the apparatus 300.

The apparatus 300 can further include wireless network interface 316. The wireless network interface 316 can be configured to enable the apparatus 300 to send wireless signals to and receive signals in accordance with one or wireless networking technologies. As such, the wireless network interface 316 can enable the apparatus 300 to connect to a wireless network via wireless network access point 104. Additionally or alternatively, the wireless network interface 316 can be configured to enable the apparatus 300 to participate in a peer-to-peer and/or other ad hoc network via a direct wireless connection to a peer device, such as second wireless communication device 204. By way of non-limiting example, wireless network interface 316 can be configured to provide a WLAN interface(s), a cellular interface(s), a WPAN interface(s) (e.g., a Bluetooth interface, Zigbee interface, wireless Universal Serial Bus interface, and/or the like), some combination thereof, and/or other type of wireless network interface. As such, the wireless network interface 316 can be configured to support any type of wireless networking technology that can be implemented by wireless communication device 102.

In some example embodiments, the apparatus 300 can include the user interface 318. It will be appreciated, however, that in some example embodiments, one or more aspects of the user interface 318 may be omitted, and in some embodiments, the user interface 318 may be omitted entirely. The user interface 318 can be in communication with the processing circuitry 310 to receive an indication of a user input and/or to provide an audible, visual, mechanical, or other output to a user. As such, the user interface 318 may include, for example, a keyboard, a keypad, one or more input buttons, a mouse, a joystick, a display, a touch screen display, a microphone, a speaker, one or more biometric input devices, and/or other input/output mechanisms. In embodiments wherein the user interface 318 comprises a touch screen display, the user interface 318 can be configured to detect and/or receive an indication of a touch gesture and/or other input to the display.

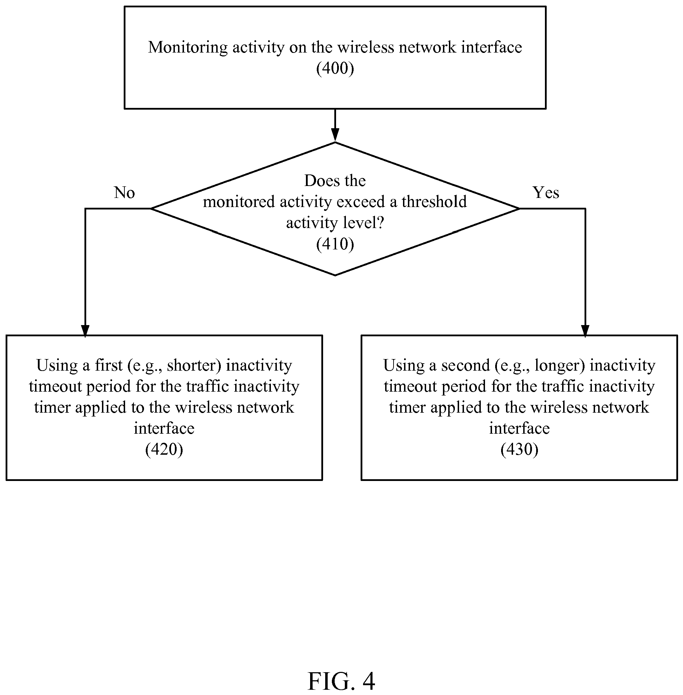

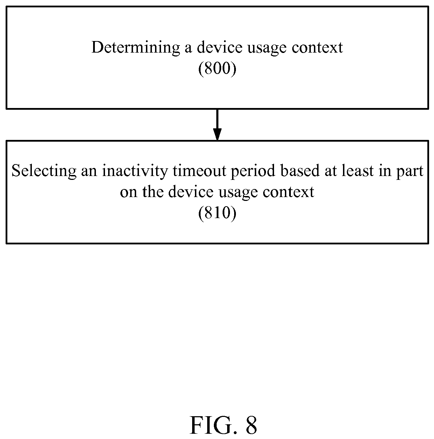

The apparatus 300 can further include timer adaptation module 320. The timer adaptation module 320 can be embodied as various means, such as circuitry, hardware, a computer program product comprising computer readable program instructions stored on a computer readable medium (for example, the memory 314) and executed by a processing device (for example, the processor 312), or some combination thereof. In some embodiments, the processor 312 (or the processing circuitry 310) can include, or otherwise control the timer adaptation module 320. The timer adaptation module 320 can be configured to control a traffic inactivity timer that can be applied to the wireless network interface 316. In this regard, the timer adaptation module 320 can be configured to dynamically adapt an inactivity timeout period that can be used for the traffic inactivity timer based at least on observed conditions in accordance with various example embodiments. For example, in some embodiments, the timer adaptation module 320 can be configured to select an inactivity timeout period for the traffic inactivity timer based at least in part on an activity level that can be monitored on the wireless network interface 316, such as in accordance with one or more of the methods illustrated in and described with respect to FIGs. 4-7. Additionally or alternatively, in some embodiments, the timer adaptation module 320 can be configured to select an inactivity timeout period for the traffic inactivity timer based at least in part on a device usage context and/or other explicit criteria, such as illustrated in and described with respect to FIG. 8.

FIG. 4 illustrates a flowchart of an example method for dynamically adapting a traffic inactivity timer based at least in part on activity on a wireless network interface in accordance with some example embodiments. In this regard, FIG. 4 illustrates operations that can be performed by the wireless communication device 102 in accordance with various example embodiments. One or more of processing circuitry 310, processor 312, memory 314, wireless network interface 316, or timer adaptation module 320 can, for example, provide means for performing the operations illustrated in and described with respect to FIG. 4.

Operation 400 can include monitoring activity on the wireless network interface 316. In some example embodiments, operation 400 can include monitoring a data traffic level, such as, by way of non-limiting example, a data rate in bits/second and/or frames/second, of data transmitted and/or received via the wireless network interface 316.

Operation 410 can include comparing the monitored activity to a threshold activity level and determining whether the monitored activity exceeds the threshold activity level. For example, in embodiments in which operation 400 includes monitoring a data traffic level on the wireless network interface 316, operation 410 can include determining whether an observed data traffic level exceeds a threshold data traffic level.

In an instance in which it is determined at operation 410 that the monitored activity does not exceed the threshold activity level, the method can proceed to operation 420, which can include using a first inactivity timeout period for the traffic inactivity timer applied to the wireless network interface 316. The first inactivity timeout period can be a shorter, more aggressive time period, than a second inactivity timeout period, which can be used in operation 430 in an instance in which it is determined that the monitored activity does exceed the threshold activity level. In this regard, the first inactivity timeout period can be selected as a smaller value, which can be more aggressive in putting the wireless network interface 316 in a power saving mode (e.g., sleep state) during inactivity periods when low bandwidth data traffic is being transmitted and/or received via wireless network interface 316, while the second inactivity timeout period can be selected as a larger value, which can be more conservative in putting the wireless network interface 316 in a sleep state so as to provide higher throughput and lower latency when bursty, higher bandwidth data traffic is being transmitted and/or received via wireless network interface 316.

If a period of traffic inactivity on the wireless network interface 316 meets or exceeds the one of the first inactivity timeout period or the second inactivity timeout period selected and used for the traffic inactivity timer in operation 420 or operation 430, the wireless network interface 316 can be placed in a power saving mode, sometimes referred to as a "sleep mode." In the power saving mode, one or more components associated with the wireless network interface, 316, such as a radio that can be associated with the wireless network interface 316 of some example embodiments, can be deactivated to reduce power consumption by the wireless communication device 102. As a further example, one or more software processes that can be associated with the wireless network interface 316 can be at least temporarily terminated when in the power saving mode.

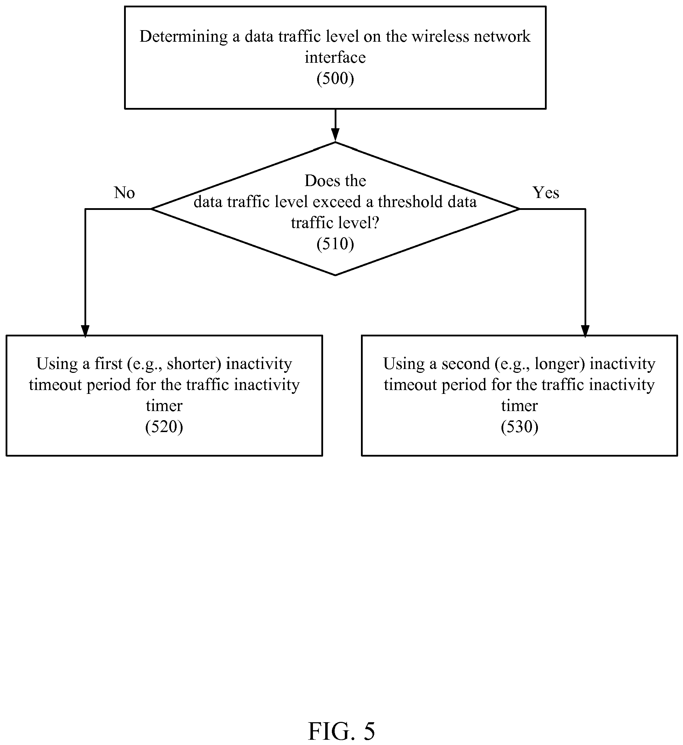

FIG. 5 illustrates a flowchart of another example method for dynamically adapting a traffic inactivity timer based at least in part on activity on a wireless network interface in accordance with some example embodiments. In this regard, FIG. 5 illustrates an embodiment of the method of FIG. 4 in which a data traffic level for the wireless network interface 316 can be determined and compared to a threshold data traffic level. As such, operations 500-530 can correspond to embodiments of operations 400-430, respectively. One or more of processing circuitry 310, processor 312, memory 314, wireless network interface 316, or timer adaptation module 320 can, for example, provide means for performing the operations illustrated in and described with respect to FIG. 5.

Operation 500 can include the wireless communication device 102 determining a data traffic level on the wireless network interface 316. The data traffic level can, for example, include one or more of an average data traffic level, an instantaneous data traffic level, a mean data traffic level, a maximum data traffic level, or a minimum data traffic level that can be determined for a period of time. The period of time can be of any length, including a snapshot period of time allowing for capture of an instantaneous data traffic level. The data traffic level that can be determined in operation 500 can, for example, be defined in terms of a data rate, such as a bit rate (e.g., in terms of bits/second), a frame rate (e.g., in terms of frames/second), and/or the like, of data transmitted and/or received via the wireless network interface 316.

Operation 510 can include comparing the data traffic level determined in operation 500 to a threshold data traffic level and determining whether the observed data traffic level exceeds the threshold data traffic level. By way of non-limiting example, the threshold data traffic level can be defined in terms of a threshold data rate, such as a threshold bit rate (e.g., in terms of bits/second), threshold frame rate (e.g., in terms of frames/second), and/or the like.

In an instance in which it is determined at operation 510 that the data traffic level exceeds the threshold data traffic level, the method can proceed to operation 520, which can include using a first inactivity timeout period for the traffic inactivity timer. If, however, it is determined at operation 510 that the data traffic level does not exceed the threshold data traffic level, the method can instead proceed to operation 530, which can include using a second inactivity timeout period for the traffic inactivity timer. The second inactivity timer can define a longer time period than the first inactivity timeout period. In this regard, a more aggressive (e.g., shorter) inactivity timeout period can be used for low bandwidth data, while a more conservative (e.g., longer) inactivity timeout period can be used for a higher bandwidth bursty data traffic pattern. The wireless network interface 316 can be placed in a power saving mode in an instance in which the traffic inactivity timer expires in response to a period of traffic inactivity on the wireless network interface 316 meeting or exceeding the one of the first inactivity timeout period or the second inactivity timeout period used for the traffic inactivity timer.

In some example embodiments, a shorter, more aggressive inactivity timeout period, such as by way of non-limiting example, 10 milliseconds, can be applied by default. In this regard, a more aggressive inactivity timeout period can allow the wireless network interface 316 to be put to sleep quickly after low bandwidth traffic, such as infrequent keep alive frames or after transmission/receipt (Tx/Rx) of voice call frames. Thus, for example, in the example methods of FIGS. 4 and 5, the shorter inactivity timeout period referenced in operations 420 and 520 can be applied by default.

In response to detection of a burst of high throughput data, the timer adaptation module 320 of some example embodiments can be configured to switch to using a longer, more conservative inactivity timeout period, such as by way of non-limiting example, 200 milliseconds, so as to keep the wireless network interface 316 awake for a longer period. In this regard, in some example embodiments, operations 430 and 530 can comprise switching from using the first (e.g., shorter) inactivity timeout period to using the second (e.g., longer) inactivity timeout period in response to detection of an activity level exceeding a threshold activity level. For example, operations 430 and 530 can comprise switching to the second (e.g., longer) inactivity timeout period following a prior time period for which the threshold activity level and/or threshold data traffic level was not exceeded. Additionally or alternatively, operations 430 and 530 can comprise switching to the second (e.g., longer) inactivity timeout period following an initial default usage of the first inactivity timeout period prior to the wireless communication device 102 observing an activity level on the wireless network interface 316. The longer, more conservative inactivity timeout period, such as can be used in operations 430 and 530, can accordingly allow the bursty download to be completed more quickly, and enable the wireless communication device 102 to be more responsive to a user data request, such as a request for email or web page download.

If, after switching to a more conservative inactivity timeout period in response to observation of bursty data traffic, the timer adaptation module 320 determines that the data traffic pattern on the wireless network interface 316 no longer correlates to bursty traffic (e.g., the data traffic level is less than a threshold data traffic level), the timer adaptation module 320 can return to using a shorter, more aggressive inactivity timeout period (e.g., the first inactivity timeout period referenced in operations 420 and 520). In this regard, after completion of a bursty traffic exchange, the traffic inactivity timer can be returned to a default, more aggressive inactivity timeout period so that the wireless network interface 316 can be more readily placed in a power saving mode.

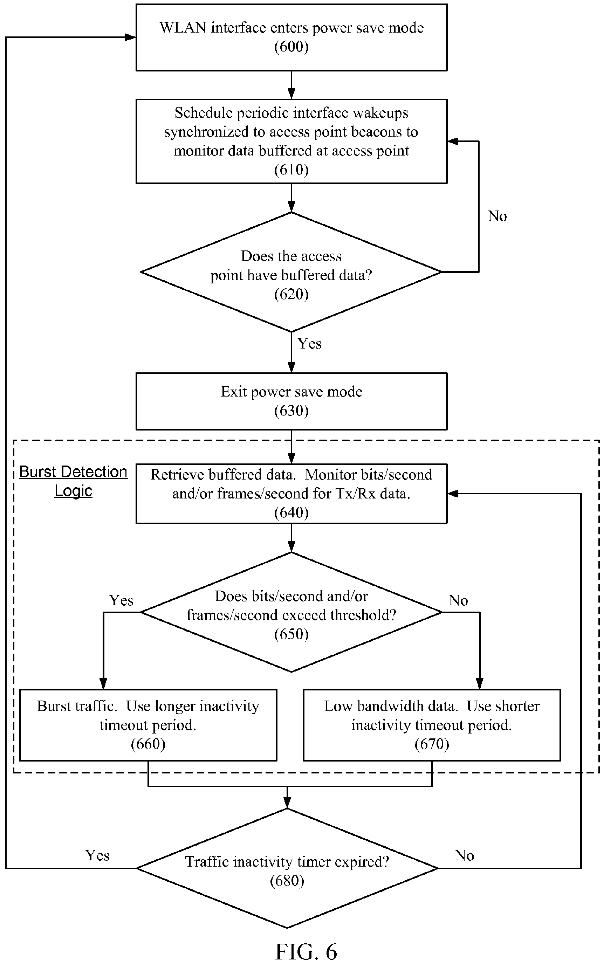

FIG. 6 illustrates a flowchart of an example method for dynamically adapting a traffic inactivity timer applied to a WLAN interface in accordance with some example embodiments. In this regard, FIG. 6 illustrates operations that can be performed by the wireless communication device 102 in accordance with various example embodiments. One or more of processing circuitry 310, processor 312, memory 314, wireless network interface 316, or timer adaptation module 320 can, for example, provide means for performing the operations illustrated in and described with respect to FIG. 6. While FIG. 6 illustrates dynamically adaptation of a traffic inactivity timer for a WLAN interface, it will be appreciated that the method illustrated in FIG. 6 can be applied *mutatis mutandis* within the scope of the disclosure to any type of wireless network interface for which a traffic inactivity timer can be applied.

With reference now to FIG. 6, operation 600 can include the WLAN interface entering a power save mode (e.g., a sleep state). For example, the WLAN interface can be placed in the power saving mode after a period of inactivity and/or at some other point for which the WLAN interface can be placed in a power saving mode.

Operation 610 can include scheduling periodic interface wakeups, which can be synchronized to access point beacons, such as beacons that can be sent by the wireless network access point 104 in some embodiments in which the wireless network access point 104 comprises a WLAN access point. In this regard, the WLAN interface can be periodically woken up to listen for beacons to enable the wireless communication device 102 to monitor for data that can be buffered for the wireless communication device 102 by the wireless network access point 104.

Operation 620 can include determining at a wakeup period whether the wireless network access point 104 has buffered data for the wireless communication device 102. This determination can, for example, be made based at least in part on a beacon that can be received by the wireless communication device 102 If it is determined at operation 620 that the wireless network access point 104 does not have buffered data, the method can return to operation 610. In this regard, the WLAN interface can be returned to the power save mode until the next scheduled wakeup.

If, however, the wireless network access point 104 does have buffered data for the wireless communication device 102, the method can instead proceed to operation 630, which can include exiting the power save mode. In this regard, the WLAN interface can be placed in an awake state enabling transmission and receipt of data.

Operation 640 can include retrieving the buffered data and observing a data traffic level across the WLAN interface. Thus, for example, operation 640 can include determining a data rate, such as in terms of bits/second and/or frames/second for Tx/Rx data on the WLAN interface.

Operation 650 can include determining whether the observed data traffic level, such as the data rate, which can, for example, be expressed in terms of a bit rate (e.g., bits/second) and/or in terms of a frame rate (e.g., frames/second), exceeds a threshold data traffic level. If it is determined at operation 650 that the monitored data traffic level exceeds the threshold data traffic level, it can be assumed that burst traffic is being transmitted and/or received on the WLAN interface, and the method can proceed to operation 660, which an include using a longer (e.g., conservative) inactivity timeout period. If, however, it is determined at operation 650 that the monitored data traffic level does not exceed the threshold level, it can be assumed that low bandwidth data is being transmitted and/or received on the WLAN interface, and the method can proceed to operation 670, which can include using a shorter (e.g., aggressive) inactivity timeout period.

Operations 640-670 can collectively form a burst detection logic, which can be used to dynamically adapt the traffic inactivity timer based on a data traffic level of data transmitted and/or received on the WLAN interface. As illustrated in FIG. 6, the burst detection logic can use implicit criteria, such as the data rate (e.g., the number of frames/bits/bytes exchanged) over a configurable time period.

Operation 680 can include determining whether the traffic inactivity timer that can be set based on the inactivity timeout period selected in operation 660 or operation 670 has expired. If the traffic inactivity timer has not expired, the method can return to operation 640. In this regard, the wireless communication device 102 can continue to retrieve buffered data (if any available) from the wireless network access point 104 and/or can transmit data over the WLAN interface. The inactivity timeout period can continue to be selectively adjusted through performance of operations 650-670 (e.g., based on the burst detection logic) in response to any changes in the observed data traffic level. If, however, it is instead determined at operation 680 that the traffic inactivity timer has expired, the method can instead return to operation 600, and the WLAN interface can be placed in a power saving (e.g., sleep) mode.

In some example embodiments, multiple data traffic thresholds can be applied. For example, if the shorter, more aggressive inactivity timeout period is being used and it is determined in operation 650 that the data rate exceeds a tunable threshold data traffic level, T1, the timer adaptation module 320 of some example embodiments can switch from the aggressive inactivity timeout period to a longer, more conservative inactivity timeout period in operation 660. If, after switching to the more conservative inactivity timeout period, it is later determined in operation 650 that the data rate is less than a second tunable threshold data traffic level, T2, then the timer adaptation module 320 can switch from the conservative inactivity timeout period back to the aggressive inactivity timeout period. In some example embodiments, threshold T2 and T1 can chosen such that T2 < T1 to implement a hysteresis condition and prevent ping pong between inactivity timeout periods in response to small fluctuations in data traffic rate.

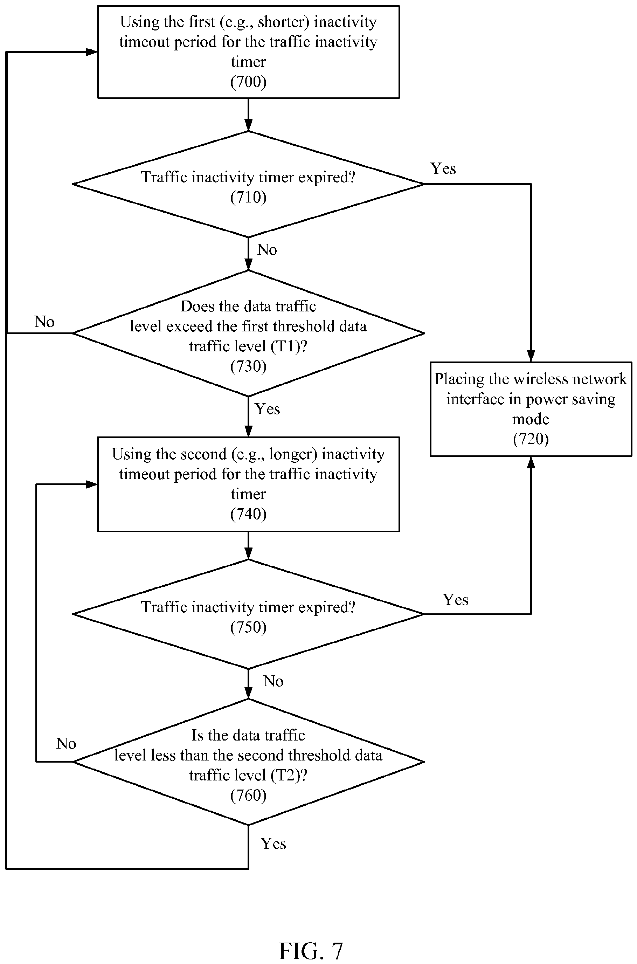

FIG. 7 illustrates a flowchart of an example method for implementing a hysteresis condition when dynamically adapting a traffic inactivity timer in accordance with some example embodiments. In this regard, FIG. 7 illustrates an example method in which two threshold data traffic levels - T1 and T2, where T2 < T1 - can be used to selectively adapt the traffic inactivity timer. One or more of processing circuitry 310, processor 312, memory 314, wireless network interface 316, or timer adaptation module 320 can, for example, provide means for performing the operations illustrated in and described with respect to FIG. 7.

Operation 700 can include using a first inactivity timeout period for the traffic inactivity timer. The first inactivity timeout period can, for example, be a shorter, more aggressive inactivity timeout period than a second inactivity timeout period, which can be a longer, more aggressive inactivity timeout period.

Operation 710 can include determining whether the traffic inactivity timer using the first inactivity timeout period has expired. Expiry of the traffic inactivity timer can occur in response to a period of traffic inactivity on the wireless network interface 316 meeting or exceeding the first inactivity timeout period. The traffic inactivity timer can, for example, be reset in response to detection of traffic. If it is determined that the traffic inactivity timer has expired, the method can proceed to operation 720, which can include placing the wireless network interface 316 in power saving mode.

If, however, it is determined at operation 710 that the traffic inactivity timer has not expired, the method can proceed to operation 730, which can include determining whether the observed data traffic level on the wireless network interface 316 exceeds T1. If the observed data traffic level does not exceed T1, the method can return to operation 700, and the wireless communication device 102 can continue to use the first inactivity timeout period. If, however, it is determined at operation 730 that the observed data traffic level does exceed T1, the method can instead proceed to operation 740, which can comprise switching from the first inactivity timeout period to the second inactivity timeout period.

Operation 750 can include determining whether the traffic inactivity timer using the second inactivity timeout period has expired. Expiry of the traffic inactivity timer can occur in response to a period of traffic inactivity on the wireless network interface 316 meeting or exceeding the second inactivity timeout period. The traffic inactivity timer can, for example, be reset in response to detection of traffic. If it is determined that the traffic inactivity timer has expired, the method can proceed to operation 720, which can include placing the wireless network interface 316 in power saving mode.

If, however, it is determined at operation 750 that the traffic inactivity timer has not expired, the method can proceed to operation 760, which can include comparing the observed data traffic level to T2 and determining whether the observed data traffic level on the wireless network interface 316 is less than T2. If the observed data traffic level is not less than T2, the method can return to operation 740, and the wireless communication device 102 can continue to use the second inactivity timeout period. If, however, it is determined at operation 760 that the observed data traffic level is less than T2, the method can instead proceed to operation 700, which can comprise switching from the second inactivity timeout period to the first inactivity timeout period.

In some example embodiments, timer adaptation module 320 can additionally or alternatively factor explicit criteria such as, a device usage context for the wireless communication device 102 when selecting an inactivity timeout period. For example, various device usage contexts can have defined associations with respective inactivity timeout periods such that an inactivity timeout period can be selected based at least in part by determining which inactivity timeout period is associated with a current device usage context. A device usage context can include any of a variety of device contexts that can be indicative of a present and/or predictive of a future data traffic pattern on the wireless network interface 316.

For example, a device usage context can include a state of open transmission control protocol (TCP) sockets. If a socket used for an application(s) associated with a bursty traffic pattern is open, the timer adaptation module 320 can select a more conservative inactivity timeout period.

Another example device usage context is an activity context for one or more elements of the user interface 318. For example, the timer adaptation module 320 of some example embodiments can be configured to consider a display state of a display that can be included in user interface 318 when selecting an inactivity timeout period. The display state can, for example, include a whether the display is in a lock state, whether the display is powered off (e.g., in a power saving mode after a period of no use), and/or other display state. For example, if the display is powered on and/or unlocked, the timer adaptation module 320 can be configured to select a more conservative (e.g., longer) inactivity timeout period, as it can be assumed that a user may be more likely to make a data request that can result in a bursty data transmission. However, if the display is powered off and/or in a locked state, the timer adaptation module 320 can be configured to select a more aggressive (e.g., shorter) inactivity timeout period, as it can be considered that the wireless communication device 102 is less likely to make a bursty data request and user experience is unlikely to be impacted by use of an aggressive inactivity timeout period.

As a further example, in some embodiments, a device usage context can be determined based at least in part on an active application(s) on the wireless communication device 102. For example, an application can have an associated data traffic pattern, such as can be defined at least in part by one or more of bandwidth, throughput, or latency requirements for supporting use of the application. Accordingly, an application can have a defined association with an inactivity timeout period corresponding to the data traffic pattern associated with the application. For example, a web browser application can be associated with a bursty data traffic pattern characterized by bursts of data transfers related to page requests. Similarly, an email application can be characterized by bursts of data transfers related to sending and receiving email. As such, a more conservative inactivity timeout period can be selected for a web browser and/or email application. For applications, such as voice call applications, characterized by more periodic low bandwidth traffic, a more aggressive inactivity timeout period can be selected.

In some example embodiments, an indication of explicit criteria, such as a device usage context, that can be used to select an inactivity timeout period can be provided to the timer adaptation module 320 by a higher layer to enable the timer adaptation module 320 to factor in the criteria when selecting an inactivity timeout period. For example, in some embodiments, an application layer can be configured to provide an indication to the timer adaptation module 320 a state of active applications on the wireless communication device 102.

FIG. 8 illustrates a flowchart of an example method for dynamically adapting a traffic inactivity timer based at least in part on a device usage context in accordance with some example embodiments. In this regard, FIG. 8 illustrates operations that can be performed by the wireless communication device 102 in accordance with some example embodiments. One or more of processing circuitry 310, processor 312, memory 314, wireless network interface 316, user interface 318, or timer adaptation module 320 can, for example, provide means for performing the operations illustrated in and described with respect to FIG. 8.

Operation 800 can include determining a device usage context. The determined device usage context can, for example, be any device usage context that can be indicative of a present and/or predictive of a future data traffic level on the wireless network interface 316. In some example embodiments, multiple current device usage contexts can be determined. By way of non-limiting example, operation 800 can include determining an active application(s) on the wireless communication device 102, a display state for a display of the wireless communication device 102, a state of open TCP sockets, and/or the like.

Operation 810 can include selecting an inactivity timeout period based at least in part on the device usage context. For example, in some embodiments, operation 810 can include selecting an inactivity timeout period having a defined association with the device usage context determined in operation 800.

In some example embodiments, the timer adaptation module 320 can be configured to select an inactivity timeout period based on a combination of an observed activity level, such as a data traffic level, on the wireless network interface 316 and one or more device usage contexts. As such, in some example embodiments, operation 810 can include selecting the inactivity timeout period further based on a data traffic level observed on the wireless network interface 316.

In some such example embodiments, the method of FIG. 8 can be applied concurrently with one or more of the methods of FIGs. 4-7. For example, in some embodiments, even if observed activity on the wireless network interface 316 does not satisfy a threshold for selecting a longer, more conservative, inactivity timeout period (e.g., as can be determined in one or more of operations 410, 510, 630, or 730), the timer adaptation module 320 can still be configured to select the longer inactivity timeout period if a determined device usage context indicates that the longer inactivity timeout period should be used. Similarly, in an instance in which an inactivity timeout period having a defined association with a device usage context defines a shorter inactivity timeout period than an inactivity timeout period that would be selected based on observed activity on the wireless network interface 316, the timer adaptation module 320 of some example embodiments can be configured to select the longer, more conservative inactivity timeout period to accommodate the observed activity on the wireless network interface 316.

While some example embodiments have been described in terms of two different levels of inactivity timeout periods, it will be appreciated that the disclosure is not so limited. In this regard, in some example embodiments, there can be three or more levels of inactivity timeout periods, which can range in their aggressiveness in putting the wireless network interface 316 into power saving mode. As a non-limiting example of an embodiment using three levels, a 1 millisecond inactivity timeout period can be applied if an observed bit rate is less than 1 megabit per second; a 50 millisecond inactivity timeout period can be applied if an observed bit rate is greater than 1 megabit per second, but less than 5 megabits per second; and a 200 millisecond inactivity timeout period can be applied if an observed bit rate is greater than 5 megabits per second. It will be appreciated, however, that additional levels (e.g., four or more levels) can be used in some example embodiments. Further, threshold data traffic levels and/or inactivity timeout periods can be varied in various example embodiments.

Moreover, in some example embodiments, inactivity timeout periods having dynamically adjustable lengths can be applied. For example, in some embodiments, two or more base inactivity timeout periods can be set for one or more respective threshold traffic activity levels, and a base inactivity timeout period applicable for a monitored traffic activity level can be modified by an offset based on explicit criteria that can be determined based at least in part on a device usage context, such as display state, active application(s) requirements, and/or the like. Thus, for example, in some embodiments, if a device usage context indicates that receipt and/or transmission of bursty traffic is likely, a base inactivity timeout period that can be selected based on an observed data traffic can be increased in length (e.g., by adding an offset) to be more conservative in putting the wireless network interface 316 in a power saving mode to provide a better user experience in anticipation of a high throughput bursty data traffic request.

In example embodiments in which a traffic inactivity timer applied to a WLAN interface is dynamically adapted, the wireless communication device 102 can be configured to use a NULL frame, such as can be used in accordance with an Institute of Electrical and Electronics Engineers (IEEE) 802.11 standard, with a power management bit set to 0 when the WLAN interface wakes up and exits a power save mode. The wireless communication device 102 can receive and/or transmit data after exiting the power save mode and, after expiration of the traffic inactivity timer, can use a NULL frame with power management bit set to 1 to enter power save mode when putting the WLAN interface to sleep. In some such example embodiments, level 1 can use a Power Save (PS) Poll mechanism in which the wireless communication device 102 can send a PS Poll frame, and the wireless network access point 104 can send exactly one frame with a data bit indicating if additional traffic is buffered for the wireless communication device 102. In such example embodiments, the wireless communication device 102 can switch to using NULL based mechanism with variable inactivity timeouts in an instance in which the wireless network access point 104 indicates that an additional frame(s) is buffered in response to the PS poll.

The various aspects, embodiments, implementations or features of the described embodiments can be used separately or in any combination. Various aspects of the described embodiments can be implemented by software, hardware or a combination of hardware and software. The described embodiments can also be embodied as a computer readable medium (or mediums) storing computer readable code including instructions that can be performed by one or more computing devices. The computer readable medium may be associated with any data storage device that can store data which can thereafter be read by a computer system. Examples of the computer readable medium include read-only memory, random-access memory, CD-ROMs, HDDs, DVDs, magnetic tape, and optical data storage devices. The computer readable medium can also be distributed over network-coupled computer systems so that the computer readable code may be stored and executed in a distributed fashion.

In the foregoing detailed description, reference was made to the accompanying drawings, which form a part of the description and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from scope of the described embodiments. For example, it will be appreciated that the ordering of operations illustrated in the flowcharts is non-limiting, such that the ordering of two or more operations illustrated in and described with respect to a flowchart can be changed in accordance with some example embodiments. As another example, it will be appreciated that in some embodiments, one or more operations illustrated in and described with respect to a flowchart can be optional, and can be omitted.

Further, the foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. The description of and examples disclosed with respect to the embodiments presented in the foregoing description are provided solely to add context and aid in the understanding of the described embodiments. The description is not intended to be exhaustive or to limit the described embodiments to the precise forms disclosed. It will be apparent to one of ordinary skill in the art that many modifications, alternative applications, and variations are possible in view of the above teachings. In this regard, one of ordinary skill in the art will readily appreciate that the described embodiments may be practiced without some or all of these specific details. Further, in some instances, well known process steps have not been described in detail in order to avoid unnecessarily obscuring the described embodiments.

## Claims

1. A method for dynamically adapting a traffic inactivity timer on a wireless communication device (102) comprising a wireless network interface (316) configurable for communication in a wireless local area network, WLAN, the method comprising, by the wireless communication device, while associated with an access point, AP, (104) of the WLAN:
determining (500) a data traffic level on the wireless network interface (316);
determining (510) whether the data traffic level exceeds a threshold data traffic level;
using (520) a first inactivity timeout period for the traffic inactivity timer in an instance in which it is determined that data traffic level does not exceed the threshold data traffic level; and
using (530) a second inactivity timeout period for the traffic inactivity timer in an instance in which it is determined that the data traffic level exceeds the threshold data traffic level;
wherein the second inactivity timeout period defines a time period that is longer than that of the first inactivity timeout period; and
wherein the wireless network interface (316) is placed in a power saving mode (600) in an instance in which the traffic inactivity timer expires in response to a period of traffic inactivity on the wireless network interface meeting or exceeding the one of the first inactivity timeout period or the second inactivity timeout period used for the traffic inactivity timer.

2. The method of claim 1, further comprising:
by the wireless communication device (102), while associated with the WLAN AP (104):
using the first inactivity timeout period as a default setting for the traffic inactivity timer;
determining the data traffic level on the wireless network interface (316) for a second time period that immediately follows a first time period for which the threshold data traffic level was not exceeded; and
switching from using the first inactivity timeout period for the traffic inactivity timer to using the second inactivity timeout period for the traffic inactivity timer in an instance in which it is determined that that the data traffic level for the second time period exceeds the threshold data traffic level.

3. The method of claim 1, further comprising:
by the wireless communication device (102), while associated with the WLAN AP (104):
determining the data traffic level on the wireless network interface (316) for a second time period that immediately follows a first time period for which the threshold data traffic level exceeded the threshold data traffic level;
determining whether the data traffic level for the second time period is less than a second threshold data traffic level, wherein the second threshold data traffic level is less than the threshold data traffic level; and
switching from using the second inactivity timeout period to using the first inactivity timeout period for the traffic inactivity timer in an instance in which the data traffic level for the second time period is less than the second threshold data traffic level.

4. The method of claim 1, further comprising the wireless communication device (102):
determining (800) a device usage context;
determining whether the device usage context has a defined association with the second inactivity timeout period; and
in an instance in which it is determined that the device usage context has a defined association with the second inactivity timeout period, using the second inactivity timeout period for the traffic inactivity timer even in an instance in which it is determined that the data traffic level does not exceed the threshold data traffic level.

5. The method of claim 4, wherein:
determining the device usage context comprises determining an active application on the wireless communication device; and
determining whether the device usage context has a defined association with the second inactivity timeout period comprises determining whether the active application has a defined association with the second inactivity timeout period.

6. The method of claim 4, wherein:
determining the device usage context comprises determining a display state of a display implemented on the wireless communication device; and
determining whether the device usage context has a defined association with the second inactivity timeout period comprises determining whether the display state has a defined association with the second inactivity timeout period.

7. The method of any of claims 1 to 4, wherein the wireless network interface comprises a WLAN interface, the method further comprising:
by the wireless communication device:
activating the WLAN interface from the power saving mode at a scheduled wakeup time to monitor for data buffered for the wireless communication device at the WLAN AP; and
receiving buffered data from the WLAN AP;
wherein determining the data traffic level comprises determining the data traffic level based at least in part on received buffered data.

8. The method of any of claims 1 to 4, wherein a radio associated with the wireless network interface is deactivated when the wireless network interface is placed in the power saving mode.

9. A wireless communication device (102) comprising:
a wireless network interface (316) configurable for communication in a wireless local area network, WLAN; and
processing circuitry (310) coupled with the wireless network interface (316), the processing circuitry (310) configured to cause the wireless communication device (102), while associated with an access point, AP, (104) of the WLAN, to at least:
determine a data traffic level on the wireless network interface (316);
determine whether the data traffic level exceeds a threshold data traffic level;
use a first inactivity timeout period for a traffic inactivity timer applied to the wireless network interface in an instance in which it is determined that data traffic level does not exceed the threshold data traffic level; and
use a second inactivity timeout period for the traffic inactivity timer in an instance in which it is determined that the data traffic level exceeds the threshold data traffic level;
wherein the second inactivity timeout period defines a time period that is longer than that of the first inactivity timeout period.

10. The wireless communication device (102) of claim 9, wherein the processing circuitry (310) is further configured to cause the wireless communication device (102), while associated with the WLAN AP (104) to:
Use the first inactivity timeout period as a default setting for the inactivity timer;
determine the data traffic level on the wireless network interface (316) for a second time period that immediately follows a first time period for which the threshold data traffic level was not exceeded; and
switch from using the first inactivity timeout period for the traffic inactivity timer to using the second inactivity timeout period for the traffic inactivity timer in an instance in which it is determined that that the data traffic level for the second inactivity time period exceeds the threshold data traffic level.

11. The wireless communication device (102) of claim 9, wherein the processing circuitry (310) is further configured to cause the wireless communication device (102), while associated with the WLAN AP (104), to:
determine the data traffic level on the wireless network interface (316) for a second time period that immediately follows a first time period for which the threshold data traffic level exceeded the threshold data traffic level;
compare the data traffic level for the second time period to a second threshold data traffic level, wherein the second data traffic level is less than the threshold data traffic level; and
switch from using the second inactivity timeout period to using the first inactivity timeout period for the traffic inactivity timer in an instance in which the data traffic level for the second time period is less than the second threshold data traffic level.

12. The wireless communication device (102) of claim 9, wherein the processing circuitry is further configured to cause the wireless communication device (102) to:
determine a device usage context;
determine whether the device usage context has a defined association with the second inactivity timeout period; and
in an instance in which it is determined that the device usage context has a defined association with the second inactivity timeout period, use the second inactivity timeout period for the traffic inactivity timer even in an instance in which it is determined that the data traffic level does not exceed the threshold data traffic level.

13. The wireless communication device (102) of claim 12, wherein the processing circuitry is further configured to cause the wireless communication device (102) to:
determine the device usage context at least in part by causing the wireless communication device (102) to determine an active application on the wireless communication device (102); and
determine whether the device usage context has a defined association with the second inactivity timeout period at least in part by causing the wireless communication device (102) to determine whether the active application has a defined association with the second inactivity timeout period.

14. The wireless communication device (102) of claim 13, wherein the processing circuitry is further configured to cause the wireless communication device (102) to:
determine the device usage context at least in part by causing the wireless communication device to determine a display state of a display implemented on the wireless communication device; and
determine whether the device usage context has a defined association with the second inactivity timeout period at least in part by causing the wireless communication device (102) to determine whether the display state has a defined association with the second inactivity timeout period.

15. A computer readable storage medium having instructions stored thereon, which, when executed by one or more processors implemented on a wireless communication device (102) comprising a wireless network interface (316) configurable for communication in a wireless area network, WLAN, cause the wireless communication device (102) to perform the method of claim 1.

## Patentansprüche

1. Verfahren zum dynamischen Anpassen eines Verkehrsinaktivitätstimers auf einer drahtlosen Kommunikationsvorrichtung (102), die eine drahtlose Netzwerkschnittstelle (316) umfasst, die für die Kommunikation in einem drahtlosen lokalen Netzwerk, WLAN, konfigurierbar ist, wobei das Verfahren umfasst, durch die drahtlose Kommunikationsvorrichtung, während sie einem Zugangspunkt, AP, (104) des WLANs zugeordnet ist:
Bestimmen (500) eines Datenverkehrspegels auf der drahtlosen Netzwerkschnittstelle (316);
Bestimmen (510), ob der Datenverkehrspegel einen Datenverkehrspegel-Schwellenwert überschreitet;
Verwenden (520) einer ersten Inaktivitäts-Timeout-Periode für den Verkehrsinaktivitätstimer in einem Fall, in dem bestimmt wird, dass der Datenverkehrspegel den Datenverkehrspegel-Schwellenwert nicht überschreitet; und
Verwenden (530) einer zweiten Inaktivitäts-Timeout-Periode für den Verkehrsinaktivitätstimer in einem Fall, in dem bestimmt wird, dass der Datenverkehrspegel den Datenverkehrspegel-Schwellenwert überschreitet;
wobei die zweite Inaktivitäts-Timeout-Periode eine Zeitperiode definiert, die länger ist als die der ersten Inaktivitäts-Timeout-Periode; und
wobei die drahtlose Netzwerkschnittstelle (316) in einen Energiesparmodus (600) versetzt wird, in einem Fall, in dem der Verkehrsinaktivitätstimer abläuft in Antwort auf eine Verkehrsinaktivitätperiode auf der drahtlosen Netzwerkschnittstelle, welche die eine von der ersten Inaktivitäts-Timeout-Periode oder der zweiten Inaktivitäts-Timeout-Periode, die für den Verkehrsinaktivitätstimer verwendet wird, trifft oder überschreitet.

2. Verfahren nach Anspruch 1, ferner umfassend:
durch die drahtlose Kommunikationsvorrichtung (102), während sie dem WLAN AP (104) zugeordnet ist:
Verwenden der ersten Inaktivitäts-Timeout-Periode als Standardeinstellung für den Verkehrsinaktivitätstimer;
Bestimmen des Datenverkehrspegels auf der drahtlosen Netzwerkschnittstelle (316) für eine zweite Zeitperiode, die unmittelbar auf eine erste Zeitperiode folgt, für die den Datenverkehrspegel-Schwellenwert nicht überschritten wurde; und
Umschalten von der Verwendung der ersten Inaktivitäts-Timeout-Periode für den Verkehrsinaktivitätstimer zur Verwendung der zweiten Inaktivitäts-Timeout-Periode für den Verkehrsinaktivitätstimer in einem Fall, in dem bestimmt wird, dass der Datenverkehrspegel für die zweite Zeitperiode den Datenverkehrspegel-Schwellenwert überschreitet.

3. Verfahren nach Anspruch 1, ferner umfassend:
durch die drahtlose Kommunikationsvorrichtung (102), während sie dem WLAN AP (104) zugeordnet ist:
Bestimmen des Datenverkehrspegels auf der drahtlosen Netzwerkschnittstelle (316) für eine zweite Zeitperiode, die unmittelbar auf eine erste Zeitperiode folgt, für die der Datenverkehrspegel-Schwellenwert den Datenverkehrspegel-Schwellenwert überschritten hat;
Bestimmen, ob der Datenverkehrspegel für die zweite Zeitperiode kleiner als ein zweiter Datenverkehrspegel-Schwellenwert ist, wobei der zweite Datenverkehrspegel-Schwellenwert kleiner als der Datenverkehrspegel-Schwellenwert ist; und
Umschalten von der Verwendung der zweiten Inaktivitäts-Timeout-Periode auf eine Verwendung der ersten Inaktivitäts-Timeout-Periode für den VerkehrsinaktivitätsTimer in einem Fall, in dem der Datenverkehrspegel für die zweite Zeitperiode kleiner als der zweite Datenverkehrspegel-Schwellenwert ist.

4. Verfahren nach Anspruch 1, ferner umfassend die drahtlose Kommunikationsvorrichtung (102):
Bestimmen (800) eines Vorrichtungsverwendungskontextes;
Bestimmen, ob der Vorrichtungsverwendungskontext eine definierte Zuordnung zu der zweiten Inaktivitäts-Timeout-Periode hat; und
in einem Fall, in dem bestimmt wird, dass der Vorrichtungsverwendungskontext eine definierte Zuordnung zu der zweiten Inaktivitäts-Timeout-Periode hat, Verwenden der zweiten Inaktivitäts-Timeout-Periode für den Verkehrsinaktivitätstimer, auch in einem Fall, in dem bestimmt wird, dass der Datenverkehrspegel den Datenverkehrspegel- Schwellenwert nicht überschreitet.

5. Verfahren nach Anspruch 4, wobei:
das Bestimmen des Vorrichtungsverwendungskontextes ein Bestimmen einer aktiven Anwendung auf der drahtlosen Kommunikationsvorrichtung umfasst; und
das Bestimmen, ob der Vorrichtungsverwendungskontext eine definierte Zuordnung zu der zweiten Inaktivitäts-Timeout-Periode hat ein Bestimmen, ob die aktive Anwendung eine definierte Zuordnung zu der zweiten Inaktivitäts-Timeout-Periode hat, umfasst.

6. Verfahren nach Anspruch 4, wobei:
das Bestimmen des Vorrichtungsverwendungskontextes ein Bestimmen eines Anzeigestatus einer Anzeige, die auf der drahtlosen Kommunikationsvorrichtung implementiert wird, umfasst; und
das Bestimmen, ob der Vorrichtungsverwendungskontext eine definierte Zuordnung zu der zweiten Inaktivitäts-Timeout-Periode hat ein Bestimmen, ob der Anzeigestatus eine definierte Zuordnung zu der zweiten Inaktivitäts-Timeout-Periode hat, umfasst.

7. Verfahren nach einem der Ansprüche 1 bis 4, wobei die drahtlose Netzwerkschnittstelle eine WLAN-Schnittstelle umfasst, wobei das Verfahren ferner umfasst:
durch die drahtlose Kommunikationsvorrichtung:
Aktivieren der WLAN-Schnittstelle aus dem Energiesparmodus zu einer geplanten Aufwachzeit, um nach Daten zu suchen, die für die drahtlose Kommunikationsvorrichtung am WLAN AP gepuffert sind; und
Empfangen von gepufferten Daten von dem WLAN AP;
wobei das Bestimmen des Datenverkehrspegels ein Bestimmen des Datenverkehrspegels basierend zumindest teilweise auf empfangenen gepufferten Daten umfasst.

8. Verfahren nach einem der Ansprüche 1 bis 4, wobei eine Funkvorrichtung, die der drahtlosen Netzwerkschnittstelle zugeordnet ist, deaktiviert wird, wenn die drahtlose Netzwerkschnittstelle in den Energiesparmodus versetzt wird.

9. Drahtlose Kommunikationsvorrichtung (102), umfassend:
eine drahtlose Netzwerkschnittstelle (316), die zur Kommunikation in einem drahtlosen lokalen Netzwerk, WLAN, konfigurierbar ist; und
eine Verarbeitungsschaltung (310), die mit der drahtlosen Netzwerkschnittstelle (316) gekoppelt ist, wobei die Verarbeitungsschaltung (310) konfiguriert ist, um die drahtlose Kommunikationsvorrichtung (102), während sie einem Zugangspunkt, AP, (104) des WLANs, zugeordnet ist, zumindest zu veranlassen:
Bestimmen eines Datenverkehrspegels auf der drahtlosen Netzwerkschnittstelle (316);
Bestimmen, ob der Datenverkehrspegel einen Datenverkehrspegel-Schwellenwert überschreitet;
Verwenden einer ersten Inaktivitäts-Timeout-Periode für einen Verkehrsinaktivitätstimer, der auf die drahtlose Netzwerkschnittstelle angewendet wird, in einem Fall, in dem bestimmt wird, dass der Datenverkehrspegel den Datenverkehrspegel-Schwellenwert nicht überschreitet; und
Verwenden einer zweiten Inaktivitäts-Timeout-Periode für den Verkehrsinaktivitätstimer in einem Fall, in dem bestimmt wird, dass der Datenverkehrspegel den Datenverkehrspegel-Schwellenwert überschreitet;
wobei die zweite Inaktivitäts-Timeout-Periode eine Zeitperiode definiert, die länger ist als die der ersten Inaktivitäts-Timeout-Periode.

10. Drahtlose Kommunikationsvorrichtung (102) nach Anspruch 9, wobei die Verarbeitungsschaltung (310) ferner konfiguriert ist, um die drahtlose Kommunikationsvorrichtung (102), während sie dem WLAN AP (104) zugeordnet ist, zu veranlassen zum:
Verwenden der ersten Inaktivitäts-Timeout-Periode als Standardeinstellung für den Inaktivitätstimer;
Bestimmen des Datenverkehrspegels auf der drahtlosen Netzwerkschnittstelle (316) für eine zweite Zeitperiode, die unmittelbar auf eine erste Zeitperiode folgt, für die der Datenverkehrspegel-Schwellenwert nicht überschritten wurde; und
Umschalten von dem Verwenden der ersten Inaktivitäts-Timeout-Periode für den Verkehrsinaktivitätstimer zu einem Verwenden der zweiten Inaktivitäts-Timeout-Periode für den Verkehrsinaktivitätstimer in einem Fall, in dem bestimmt wird, dass der Datenverkehrspegel für die zweite Inaktivitätsperiode den Datenverkehrspegel-Schwellenwert überschreitet.

11. Drahtlose Kommunikationsvorrichtung (102) nach Anspruch 9, wobei die Verarbeitungsschaltung (310) ferner konfiguriert ist, um die drahtlose Kommunikationsvorrichtung (102), während sie dem WLAN AP (104) zugeordnet ist, zu veranlassen zum:
Bestimmen des Datenverkehrspegels auf der drahtlosen Netzwerkschnittstelle (316) für eine zweite Zeitperiode, die unmittelbar auf eine erste Zeitperiode folgt, für die der Datenverkehrspegel-Schwellenwert den Datenverkehrspegel-Schwellenwert überschritten hat;
Vergleichen des Datenverkehrspegels für die zweite Zeitperiode mit einem zweiten Datenverkehrspegel-Schwellenwert, wobei der zweite Datenverkehrspegel kleiner als der Datenverkehrspegel-Schwellenwert ist; und
Umschalten von dem Verwenden der zweiten Inaktivitäts-Timeout-Periode zu einem Verwenden der ersten Inaktivitäts-Timeout-Periode für den Verkehrsinaktivitätstimer in einem Fall, in dem der Datenverkehrspegel für die zweite Zeitperiode kleiner als der zweite Datenverkehrspegel-Schwellenwert ist.

12. Drahtlose Kommunikationsvorrichtung (102) nach Anspruch 9, wobei die Verarbeitungsschaltung ferner konfiguriert ist, um die drahtlose Kommunikationsvorrichtung (102) zu veranlassen zum:
Bestimmen eines Vorrichtungsverwendungskontextes;
Bestimmen, ob der Vorrichtungsverwendungskontext eine definierte Zuordnung zu der zweiten Inaktivitäts-Timeout-Periode hat; und
in einem Fall, in dem bestimmt wird, dass der Vorrichtungsverwendungskontext eine definierte Zuordnung zu der zweiten Inaktivitäts-Timeout-Periode hat, Verwenden der zweiten Inaktivitäts-Timeout-Periode für den Vekehrsinaktivitätstimer, auch in einem Fall, in dem bestimmt wird, dass der Datenverkehrspegel den Datenverkehrspegel-Schwellenwert nicht überschreitet.

13. Drahtlose Kommunikationsvorrichtung (102) nach Anspruch 12, wobei die Verarbeitungsschaltung ferner konfiguriert ist, um die drahtlose Kommunikationsvorrichtung (102) zu veranlassen zum:
Bestimmen des Vorrichtungsverwendungskontextes zumindest teilweise durch ein Veranlassen der drahtlosen Kommunikationsvorrichtung (102), eine aktive Anwendung auf der drahtlosen Kommunikationsvorrichtung (102) zu bestimmen; und
Bestimmen, ob der Vorrichtungsverwendungskontext eine definierte Zuordnung zu der zweiten Inaktivitäts-Timeout-Periode hat, zumindest teilweise durch ein Veranlassen der drahtlosen Kommunikationsvorrichtung (102) zu bestimmen, ob die aktive Anwendung eine definierte Zuordnung zu der zweiten Inaktivitäts-Timeout-Periode hat.

14. Drahtlose Kommunikationsvorrichtung (102) nach Anspruch 13, wobei die Verarbeitungsschaltung ferner konfiguriert ist, um die drahtlose Kommunikationsvorrichtung (102) zu veranlassen zum:
Bestimmen des Vorrichtungsverwendungskontextes zumindest teilweise durch ein Veranlassen der drahtlosen Kommunikationsvorrichtung, einen Anzeigestatus einer auf der drahtlosen Kommunikationsvorrichtung implementierten Anzeige zu bestimmen; und
Bestimmen, ob der Vorrichtungsverwendungskontext eine definierte Zuordnung zu der zweiten Inaktivitäts-Timeout-Periode hat zumindest teilweise durch ein Verlassen der drahtlosen Kommunikationsvorrichtung (102), zu bestimmen, ob der Anzeigestatus eine definierte Zuordnung zu der zweiten Inaktivitäts-Timeout-Periode hat.

15. Computerlesbares Speichermedium mit darauf gespeicherten Anweisungen, die, wenn sie von einem oder mehreren Prozessoren ausgeführt werden, die auf einer drahtlosen Kommunikationsvorrichtung (102) implementiert sind, die eine drahtlose Netzwerkschnittstelle (316) umfasst, die für die Kommunikation in einem drahtlosen Bereichsnetzwerk, WLAN, konfigurierbar ist, die drahtlose Kommunikationsvorrichtung (102) dazu zu veranlassen, das Verfahren nach Anspruch 1 durchzuführen.

## Revendications

1. Un procédé d'adaptation dynamique d'un temporisateur d'inactivité de trafic sur un dispositif de communication sans fil (102) comprenant une interface de réseau sans fil (316) configurable pour la communication dans un réseau d'étendue locale sans fil, WLAN, le procédé comprenant, par le dispositif de communication sans fil, lorsqu'il est associé à un point d'accès, AP, (104) du WLAN :
la détermination (500) d'un niveau de trafic de données sur l'interface de réseau sans fil (316) ;
la détermination (510) si le niveau de trafic de données excède ou non un seuil de niveau de données de trafic ;
l'utilisation (520) d'une première période de temps mort d'inactivité pour le temporisateur d'inactivité de trafic dans une situation où il est déterminé que le niveau de trafic de données ne dépasse pas le seuil de niveau de trafic de données ; et
l'utilisation (530) d'une seconde période de temps mort d'inactivité pour le temporisateur d'inactivité de trafic dans une situation où il est déterminé que le niveau de trafic de données dépasse le seuil de niveau de trafic de données ;
dans lequel la seconde période de temps mort d'inactivité définit une période temporelle qui est plus longue que celle de la première période de temps mort d'inactivité ; et
dans lequel l'interface de réseau sans fil (316) est placée dans un mode d'économie d'énergie (116) dans une situation où le temporisateur d'inactivité de trafic expire en réponse au fait qu'une période d'inactivité de trafic sur l'interface de réseau sans fil atteint ou dépasse l'une d'entre la première période de temps mort d'inactivité ou la seconde période de temps mort d'inactivité utilisée pour le temporisateur d'inactivité de trafic.

2. Le procédé de la revendication 1, comprenant en outre :
par le dispositif de communication sans fil (102), pendant qu'il est associé à l'AP (104) du WLAN :
l'utilisation de la première période de temps mort d'inactivité comme paramétrage par défaut du temporisateur d'inactivité de trafic ;
la détermination du niveau de trafic de données sur l'interface de réseau sans fil (316) pendant une seconde période temporelle qui suit immédiatement une première période temporelle pendant laquelle le seuil de niveau de trafic de données n'a pas été dépassé ; et
le basculement de l'utilisation de la première période de temps mort d'inactivité pour le temporisateur d'inactivité de trafic à l'utilisation de la seconde période de temps mort d'inactivité pour le temporisateur d'inactivité de trafic dans une situation où il est déterminé que le niveau du trafic de données pendant la seconde période temporelle dépasse le seuil de niveau de trafic de données.

3. Le procédé de la revendication 1, comprenant en outre :
par le dispositif de communication sans fil (102), pendant qu'il est associé à l'AP (104) du WLAN :
la détermination du niveau de trafic de données sur l'interface de réseau sans fil (316) pendant une seconde période temporelle pendant laquelle le niveau du trafic de données a dépassé le seuil de niveau de trafic de données ;
la détermination si le niveau de trafic de données pendant la seconde période temporelle est ou non inférieur à un second seuil de niveau de trafic de données, le second seuil de niveau de trafic de données étant inférieur au seuil du niveau de trafic de données ; et
le basculement de l'utilisation de la seconde période de temps mort d'inactivité à l'utilisation de la première période de temps mort d'inactivité pour le temporisateur d'inactivité de trafic dans une situation où le niveau de trafic de données pendant la seconde période temporelle est inférieur au second seuil de niveau de trafic de données.

4. Le procédé de la revendication 1, comprenant en outre, par le dispositif de communication sans fil (102) :
la détermination (800) d'un contexte d'usage du dispositif ;
la détermination si le contexte d'usage du dispositif présente ou non une association définie avec la seconde période de temps mort d'inactivité ; et
dans une situation où il est déterminé que le contexte d'usage du dispositif présente une association définie avec la seconde période de temps mort d'inactivité, l'utilisation de la seconde période de temps mort d'inactivité pour le temporisateur d'inactivité de trafic même dans une situation où il est déterminé que le niveau du trafic de données ne dépasse pas le seuil de niveau de trafic de données.

5. Le procédé de la revendication 4, dans lequel :
la détermination du contexte d'usage du dispositif comprend la détermination d'une application active sur le dispositif de communication sans fil ; et
la détermination si le contexte d'usage du dispositif présente ou non une association définie avec la seconde période de temps mort d'inactivité comprend la détermination si l'application active présente ou non une association définie avec la seconde période de temps mort d'inactivité.

6. Le procédé de la revendication 4, dans lequel :
la détermination du contexte d'usage du dispositif comprend la détermination d'un état d'affichage d'un afficheur implémenté sur le dispositif de communication sans fil ; et
la détermination si le contexte d'usage du dispositif présente ou non une association définie avec la seconde période de temps mort d'inactivité comprend la détermination si l'état d'affichage présente ou non une association définie avec la seconde période de temps mort d'inactivité.

7. Le procédé de l'une des revendications 1 à 4, dans lequel l'interface de réseau sans fil comprend une interface WLAN, le procédé comprenant en outre :
par le dispositif de communication sans fil :
l'activation de l'interface WLAN depuis le mode d'économie d'énergie à un instant de réveil planifié pour surveiller des données mises en tampon pour le dispositif de communication sans fil au niveau de l'AP du WLAN ; et
la réception des données mises en tampon depuis l'AP du WLAN ;
dans lequel la détermination du niveau de trafic de données comprend la détermination du niveau de trafic de données au moins en partie sur la base des données mises en tampon reçues.

8. Le procédé de l'une des revendications 1 à 4, dans lequel une radio associée à l'interface de réseau sans fil est désactivée lorsque l'interface de réseau sans fil est placée dans le mode d'économie d'énergie.

9. Un dispositif de communication sans fil (102) comprenant :
une interface de réseau sans fil (316) configurable pour la communication dans un réseau d'étendue locale sans fil, WLAN ; et
une circuiterie de traitement (310) couplée à l'interface de réseau sans fil (316), la circuiterie de traitement (310) étant configurée pour faire en sorte que le dispositif de communication sans fil (102), lorsqu'il est associé à un point d'accès, AP, (104) du WLAN, assure au moins :
la détermination d'un niveau de trafic de données sur l'interface de réseau sans fil (316) ;
la détermination si le niveau de trafic de données excède ou non un seuil de niveau de données de trafic ;
l'utilisation d'une première période de temps mort d'inactivité pour un temporisateur d'inactivité de trafic appliqué à l'interface de réseau sans fil dans une situation où il est déterminé que le niveau de trafic de données ne dépasse pas le seuil de niveau de trafic de données ; et
l'utilisation d'une seconde période de temps mort d'inactivité pour le temporisateur d'inactivité de trafic dans une situation où il est déterminé que le niveau de trafic de données dépasse le seuil de niveau de trafic de données ;
dans lequel la seconde période de temps mort d'inactivité définit une période temporelle qui est plus longue que celle de la première période de temps mort d'inactivité.

10. Le dispositif de communication sans fil (102) de la revendication 9, dans lequel la circuiterie de traitement (310) est en outre configurée pour faire en sorte que le dispositif de communication sans fil (102), lorsqu'il est associé à l'AP (104) du WLAN, assure :
l'utilisation de la première période de temps mort d'inactivité comme paramétrage par défaut du temporisateur d'inactivité ;
la détermination du niveau de trafic de données sur l'interface de réseau sans fil (316) pendant une seconde période temporelle qui suit immédiatement une première période temporelle pendant laquelle le seuil de niveau de trafic de données n'a pas été dépassé ; et
le basculement de l'utilisation de la première période de temps mort d'inactivité pour le temporisateur d'inactivité de trafic à l'utilisation de la seconde période de temps mort d'inactivité pour le temporisateur d'inactivité de trafic dans une situation où il est déterminé que le niveau du trafic de données pendant la seconde période temporelle d'inactivité dépasse le seuil de niveau de trafic de données.

11. Le dispositif de communication sans fil (102) de la revendication 9, dans lequel la circuiterie de traitement (310) est en outre configurée pour faire en sorte que le dispositif de communication sans fil (102), lorsqu'il est associé à l'AP (104) du WLAN, assure :
la détermination du niveau de trafic de données sur l'interface de réseau sans fil (316) pendant une seconde période temporelle pendant laquelle le niveau du trafic de données a dépassé le seuil de niveau de trafic de données ;
la comparaison du niveau de trafic de données pendant la seconde période temporelle à un second seuil de niveau de trafic de données, le second seuil de niveau de trafic de données étant inférieur au seuil du niveau de trafic de données ; et
le basculement de l'utilisation de la seconde période de temps mort d'inactivité à l'utilisation de la première période de temps mort d'inactivité pour le temporisateur d'inactivité de trafic dans une situation où le niveau de trafic de données pendant la seconde période temporelle est inférieur au second seuil de niveau de trafic de données.

12. Le dispositif de communication sans fil (102) de la revendication 9, dans lequel la circuiterie de traitement (310) est en outre configurée pour faire en sorte que le dispositif de communication sans fil (102) assure :
la détermination d'un contexte d'usage du dispositif ;
la détermination si le contexte d'usage du dispositif présente ou non une association définie avec la seconde période de temps mort d'inactivité ; et
dans une situation où il est déterminé que le contexte d'usage du dispositif présente une association définie avec la seconde période de temps mort d'inactivité, l'utilisation de la seconde période de temps mort d'inactivité pour le temporisateur d'inactivité de trafic même dans une situation où il est déterminé que le niveau du trafic de données ne dépasse pas le seuil de niveau de trafic de données.

13. Le dispositif de communication sans fil (102) de la revendication 12, dans lequel la circuiterie de traitement (310) est en outre configurée pour faire en sorte que le dispositif de communication sans fil (102) assure :
la détermination du contexte d'usage du dispositif au moins en partie en faisant en sorte que le dispositif de communication sans fil (102) détermine une application active sur le dispositif de communication sans fil ; et
la détermination si le contexte d'usage du dispositif présente ou non une association définie avec la seconde période de temps mort d'inactivité au moins en partie en faisant en sorte que le dispositif de communication sans fil (102) détermine si l'application active présente ou non une association définie avec la seconde période de temps mort d'inactivité.

14. Le dispositif de communication sans fil (102) de la revendication 9, dans lequel la circuiterie de traitement (310) est en outre configurée pour faire en sorte que le dispositif de communication sans fil (102) assure :
la détermination du contexte d'usage du dispositif au moins en partie en faisant en sorte que le dispositif de communication sans fil détermine un état d'affichage d'un afficheur implémenté sur le dispositif de communication sans fil ; et
la détermination si le contexte d'usage du dispositif présente ou non une association définie avec la seconde période de temps mort d'inactivité au moins en partie en faisant en sorte que le dispositif de communication sans fil (102) détermine si l'état d'affichage présente ou non une association définie avec la seconde période de temps mort d'inactivité.

15. Un support de stockage lisible par calculateur sur lequel sont stockées des instructions qui, lorsqu'elles sont exécutées par un ou plusieurs processeurs implémentés sur un dispositif de communication sans fil (102) comprenant une interface de réseau sans fil (316) configurable pour la communication dans un réseau d'étendue locale, WLAN, font en sorte que le dispositif de communication sans fil (102) mette en oeuvre le procédé de la revendication 1.
